# EUROPEAN PATENT APPLICATION

(11) **EP 1 657 776 A2**
(43) Date of publication of application: **17.05.2006**
(21) Application number: 05024459.9
(22) Date of filing: 09.11.2005
(51) Int. Cl.: H01M 10/44, H01M 10/46, H01M 2/10, H01M 2/34, H02J 7/00

(54) **Battery for mobile communication terminal**

(30) Priority: 10.11.2004 KR 2004091613
(71) Applicant: LG Electronics Inc., Yongdungpo-gu Seoul (KR)
(72) Inventor: Jeon, Hyung-Woo, Gwangmyeong Gyeonggi-Do (KR)
(74) Representative: TER MEER - STEINMEISTER & PARTNER GbR

(57) **Abstract**

A battery for a mobile communication terminal including: a battery cell, a protection circuit assembly connected to the battery cell and configured to stabilize a current when the battery cell is charged or discharged, a protection cover configured to cover the protection circuit assembly, and a coupling unit configured to couple the protection cover to the battery cell.

## Description

### BACKGROUND OF THE INVENTION

### 1. Field of the Invention

The present invention relates to a battery for a mobile communication terminal, and more particularly to a battery for a mobile communication terminal that is easy to assemble and which includes components that are firmly coupled together.

### 2. Description of the Related Art

A mobile communication terminal can be carried with a user allowing the user to call another party wherever the user is located. Further, the mobile terminal generally includes a detachable battery for supplying power to the terminal. The battery can also be recharged.

Generally, a lithium cell is used for the mobile terminal battery. In the lithium cell, lithium ions are generated from an anode formed of a lithium oxide by an oxidation process. Then, the lithium ions are moved by an electrolyte to be deoxidized at a cathode formed of carbon, etc., thereby generating electric energy. The mobile terminal is then operated using the generated electric energy.

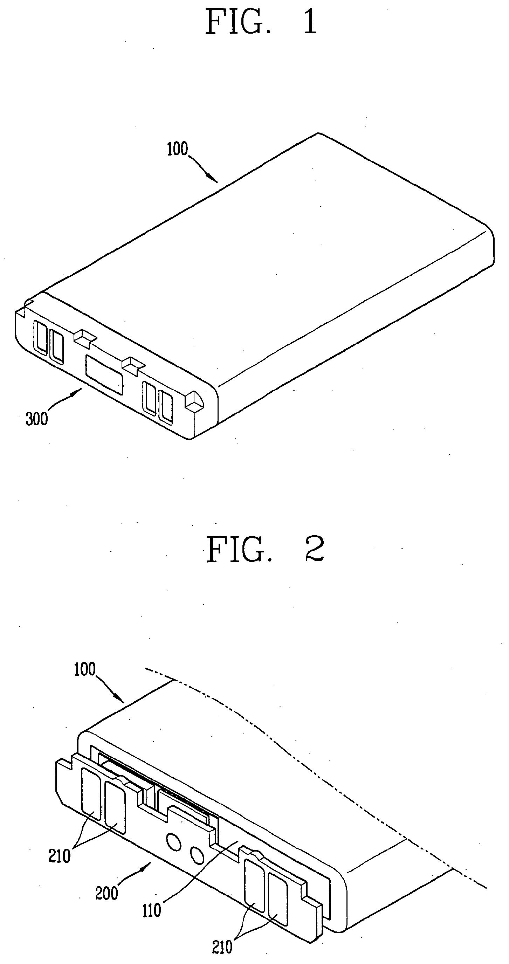

For example, FIG. 1 is a perspective view showing one example of a related art battery, and FIG. 2 is a perspective view showing the related art battery having no cover member. As shown in these figures, the battery includes a hexahedron-shaped cell 100 filled with electrolyte, etc. and a protection circuit assembly 200 connected to one side of the cell 100. The protection circuit assembly 200 stabilizes a current when the battery is charged or discharged. Further, the battery also includes a protection cover 300 for covering the protection circuit assembly 200.

In addition, the cell 100 is formed of an aluminum material and is hermetically sealed. Ports 210 of the protection circuit assembly 200 are respectively connected to corresponding ports of the cell 100. The protection cover 300 is also formed of a nylon-based resin.

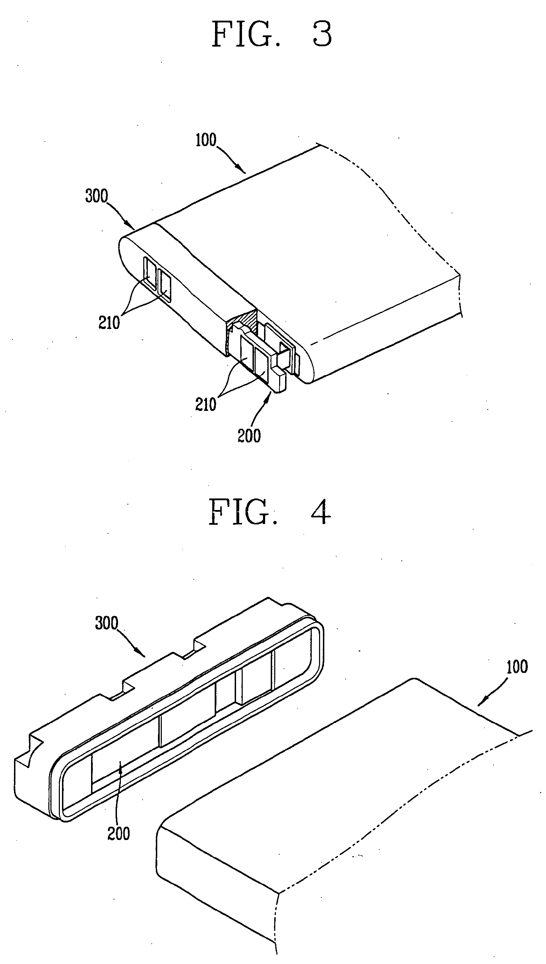

The protection circuit assembly 200 and the protection cover 300 are coupled to the cell 100 as follows. As shown in FIG. 3, the protection circuit assembly 200 is attached to one side surface of the cell 100 using a spot welding or a laser welding method. Further, the protection cover 300 is formed over the protection circuit assembly 200 using a nylon-based molded resin.

However, in the related art battery, because the protection cover 300 is attached to the aluminum cell 100 using a molded resin, the cell 100 and the protection cover 300 become easily separated from each other when the battery is dropped or when an external force is applied to the battery. Therefore, a gap between the cell 100 and the protection cover 300 is generated.

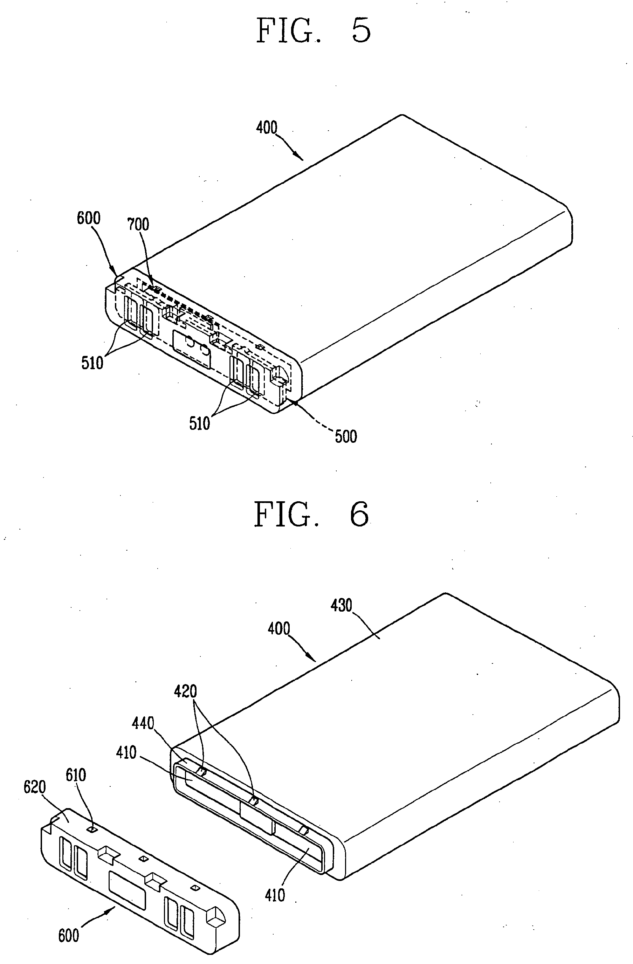

Another example of coupling the protection circuit assembly 200 and the cover 300 to the cell 100 is shown in FIG. 4. As shown in FIG. 4, a nylon-based resin is insert-molded to form the protection cover 300 so the protection circuit assembly 200 can be positioned therein. The protection cover 300 is then attached to one side surface of the cell 100 using a bonding process.

However, the related art battery has the following problems. First, it is difficult to bond the protection cover 300 having the protection circuit assembly 200 therein to the cell 100. Also, because the protection cover 300 formed of a nylon-based resin is hardened by a bonding material, it is easily damaged when the battery is dropped or an external impact is applied thereto.

### BRIEF DESCRIPTION OF THE INVENTION

Accordingly, one object of the present invention is to address the above-noted and other problems.

Another object of the present invention is to facilitate an assembly of a cell and other components of the battery and to firmly maintain a coupled state therebetween.

To achieve these and other advantages and in accordance with the purpose of the present invention, as embodied and broadly described herein, there is provided a battery for a mobile communication terminal. The battery according to an aspect of the present invention includes a battery cell, a protection circuit assembly connected to the battery cell and configured to stabilize a current when the battery cell is charged or discharged, a protection cover configured to cover the protection circuit assembly, and a coupling unit configured to couple the protection cover to the battery cell.

According to another aspect of the present invention, there is provided a method of manufacturing a battery for a mobile communication terminal, which includes forming a battery cell having a power source for providing power to the mobile terminal, forming a protection circuit assembly for stabilizing the power source of the battery cell when the battery cell is charged or discharged, forming a protection cover for covering the protection circuit assembly, and forming a coupling unit for coupling the protection cover to the battery cell.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:
FIG. 1 is a perspective view showing a related art battery for a mobile communication terminal;
FIG. 2 is a perspective view showing a protection circuit assembly of the related art battery for a mobile communication terminal;
FIGs. 3 and 4 are perspective views respectively showing a coupling structure of the related art battery for the mobile terminal;
FiGs. 5 and 6 are respectively a perspective view and a disassembled perspective view showing a battery for a mobile communication terminal according to a first embodiment of the present invention;
FIG. 7 is a sectional view showing an assembly of the battery for a mobile communication terminal according to the present invention;
FIGs. 8 and 9 are plane views showing a connection port unit included in the battery for a mobile communication terminal according to the present invention;
FIG. 10 is a sectional view showing a coupling structure of a battery for a mobile communication terminal according to a second embodiment of the present invention;
FIGs. 11 and 12 are respectively a perspective view and a disassembled perspective view showing a battery for a mobile communication terminal according to a third embodiment of the present invention;
FIG. 13 is a sectional view showing an assembly of the battery for a mobile communication terminal according to the present invention; and
FIG. 14 is a sectional view showing a coupling structure of a battery for a mobile communication terminal according to a fourth embodiment of the present invention.

### DETAILED DESCRIPTION OF THE INVENTION

Reference will now be made in detail to the preferred embodiments of the present invention, examples of which are illustrated in the accompanying drawings.

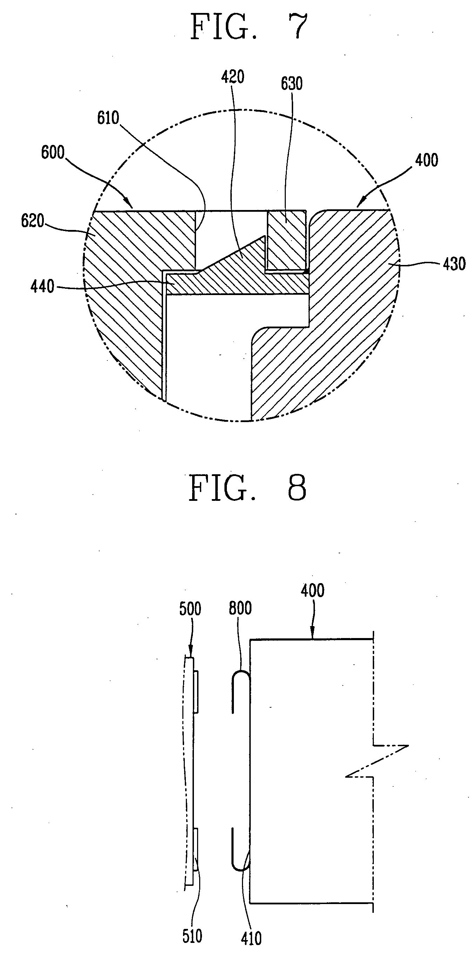

Turning first to FIGS. 5 and 6, which are respectively a perspective view and a disassembled perspective view showing a battery for a mobile communication terminal according to a first embodiment of the present invention. As shown, the battery includes a cell 400, a protection circuit assembly 500 connected to the cell 400 for stabilizing a current when the battery is charged and discharged, a protection cover 600 covering the protection circuit assembly 500, and a coupling unit 700 for coupling the protection cover 600 to the cell 400.

Further, the cell 400 preferably has a hexahedron shape, is formed of aluminum, and contains an electrolyte, etc. Ports 410 are also provided at one side of the cell 400. In addition, the protection circuit assembly 500 and the protection cover 600 are integrally formed using an insertion-molding method. Preferably, the protection cover 600 is formed of a nylon-based resin, and the protection circuit assembly 500 includes ports 510 to be connected to the ports 410 of the cell 400.

Further, as shown in FIG. 6, the coupling unit 700 shown in FIG. 5 includes a plurality of hooks 420 protruding from one side of the cell 400, and fixing holes 610 formed on a corresponding position of the protection cover 600 so as to lock and fix in the fixing holes 610. Also shown is a bracket 440 protruding from one side of a body 430 of the cell 400.

In addition, the hooks 420 are preferably formed on the bracket 440 with a certain gap existing between the hooks 420. The bracket 440 is also preferably formed as a closed curved line for covering the ports 410 of the cell 400 at a side where the ports 410 are located. As shown in FIG. 6, the hooks 420 are formed at an outer side surface of the bracket 440.

In addition, as shown in FIG. 7, an extended portion 630 having a length corresponding to a length of the bracket 440 is formed at one side of a body 620 of the protection cover 600. The fixing holes 610 are penetratingly-formed at the extended portion 630 and are located at positions to be engaged with the fixing hooks 420. Further, when the protection cover 600 is coupled to the cell 400, the bracket 440 is inserted into the extended portion 630 so the extended portion 630 covers the bracket 440, and the hooks 420 are respectively fitted into the fixing holes 610.

In addition, as shown in FIG. 8, when the protection cover 600 has been coupled to the cell 400, a connection port unit 800 for connecting the ports 510 of the protection circuit assembly 500 to the ports 410 of the cell 400 is provided between the protection circuit assembly 500 and the cell 400. In the example of FIG. 8, the connection port unit 800 is a bent conductive elastic member respectively attached to the ports 410 of the cell 400. That is, one side of the conductive elastic member is respectively attached to the ports 410 of the cell 400. The conductive elastic member may also be respectively attached to the ports 510 of the protection circuit assembly 500.

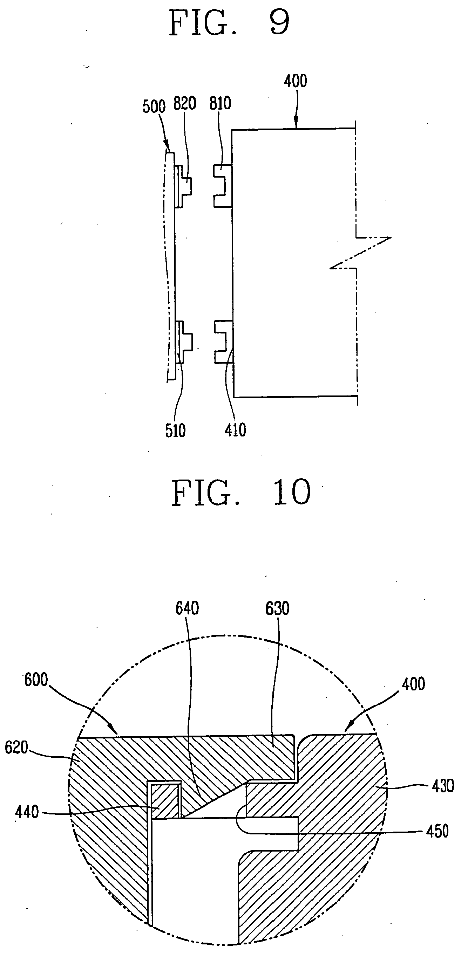

Another example of the connection port unit 800 is shown in FIG. 9. As shown therein, the connection port unit 800 may include a conductive compression member 810 respectively attached to the ports 410 of the cell 400, and a conductive fit member 820 respectively attached to the ports 510 of the protection circuit assembly 500 thus to be fitted into the conductive compression member 810. The member 810 may also be formed on the ports 510 and the member 820 formed on the ports 410.

Turning now to a second embodiment of the present invention shown in FIG. 10. As shown in FIG. 10, the battery includes a plurality of hooks 640 protrudingly-formed at an inner side surface of the extended portion 630 of the protection cover 600, and a plurality of fixing holes 450 penetratingly-formed at the bracket 440 of the cell 400 to engage the hooks 640. The protection cover 600 and the cell 400 are coupled to each other when the hooks 640 are fitted into the stopping holes 450 of the bracket 440. Note, this structure is substantially opposite to the structure shown in FIGs. 6 and 7.

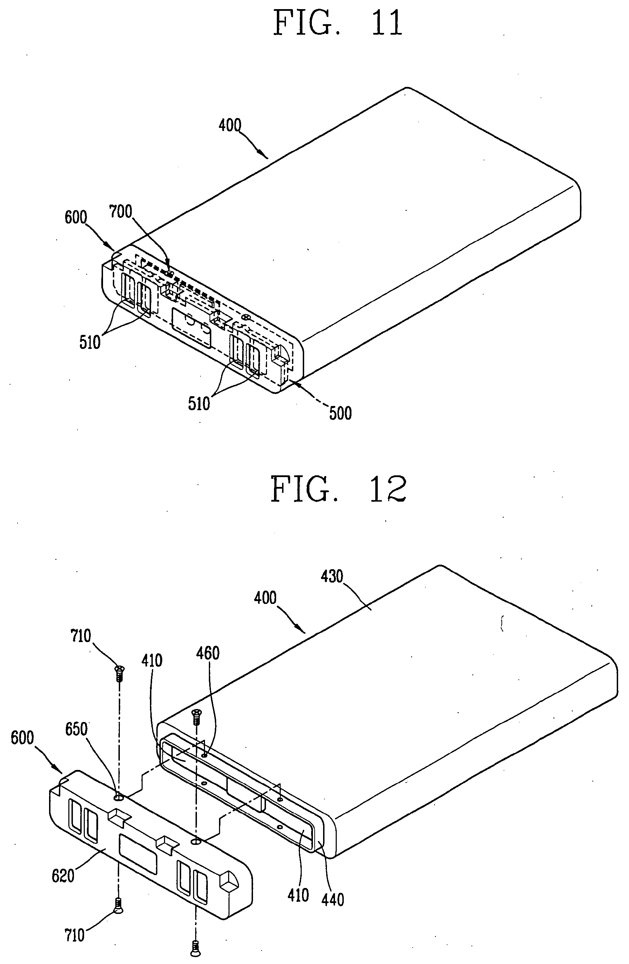

Next, a third embodiment of the present invention is shown in FiGs. 11 and 12. As shown in these figures, the battery includes the cell 400, the protection circuit assembly 500, the protection cover 600, and the coupling unit 700 for coupling the protection cover 600 to the cell 400. Further, in this embodiment, and as shown in FIG. 12, the coupling unit 700 shown in FIG. 11 includes through holes 650 formed on the protection cover 600, screw holes 460 formed at one side of the cell 400, and coupling screws 710 respectively inserted into the through holes 650 to be coupled to the screw holes 460.

Also, as noted above, the protection circuit assembly 500 and the protection cover 600 are integrally formed using an insertion-molding method, the protection cover 600 is formed of a nylon-based resin, and the protection circuit assembly 500 includes ports 510 connected to the ports 410 of the cell 400.

Further, as shown in FIG. 12, the bracket 440 protrudes from one side of the body 430 of the cell 400. The plural screw holes 460 are also preferably formed on the bracket 440 with a certain gap therebetween. The bracket 440 is also preferably formed as a closed curved line for covering the ports 410 at a side where the ports 410 are formed.

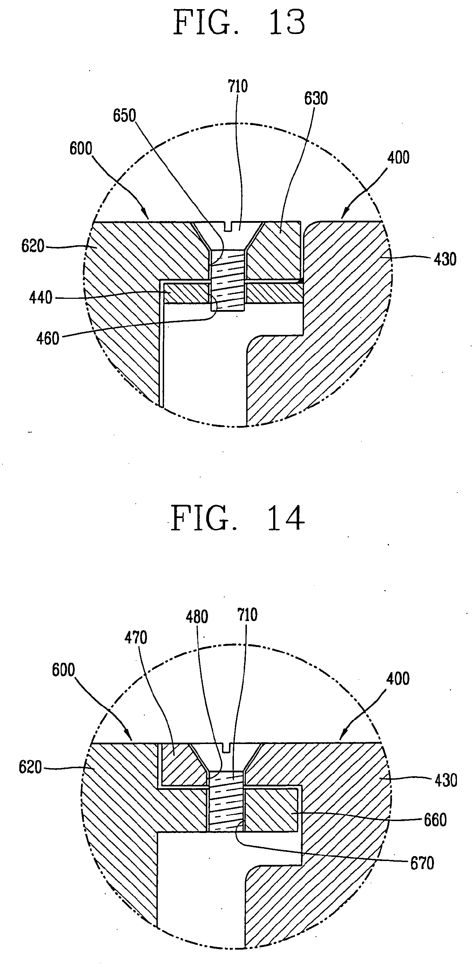

In addition, as shown in FIG. 13, the extended portion 630 having the length corresponding to a length of the bracket 440 is formed at one side of a body 620 of the protection cover 600, and the through holes 650 are penetratingly-formed at the extended portion 630 with a certain gap therebetween. As shown in FIG. 13, when the protection cover 600 is coupled to the cell 400, the bracket 440 is inserted into the extended portion 630 so that the extended portion 630 covers the bracket 440.

Accordingly, the through holes 650 of the protection cover 600 are coupled to the screw holes 460 of the cell 400. Then, the coupling screws 710 are respectively coupled to the through holes 650 and the screw holes 460. In addition, when the protection cover 600 has been coupled to the cell 400, the connection port unit 800 shown in FIGs. 8 and 9 are provided between the protection circuit assembly 500 and the cell 400.

Next, a fourth embodiment of the present invention will be discussed with reference to FIG. 14. As shown therein, an extension portion 660 is formed at one side of the body 620 of the protection cover 600, and a plurality of screw holes 670 are formed at the extension portion 660 with a certain gap therebetween. Further, a bracket 470 having a certain length and thickness corresponding to a length and thickness of the extension portion 660 is formed at one side of the body 430 of the cell 400.

Through holes 480 having a number corresponding to the number of the screw holes 670 are formed on the bracket 470. When the extension portion 660 is coupled to the bracket 470, the extension portion 660 is inserted into the bracket 470 of the cell 400. Further, when the through holes 480 are made to correspond to the screw holes 670, the coupling screws 710 are respectively coupled to the through holes 480 and the screw holes 670. Note, this structure is substantially opposite to the structure shown in FIGs. 12 and 13.

In the first to fourth embodiments, the protection circuit assembly 500 and the protection cover 600 can be separated from each other or can be integrally formed using an insertion-molding method. Further, the protection cover 600 has a shape for covering the protection circuit assembly 500.

In addition, the protection circuit assembly 500 can be attached to the cell 400 by welding, etc. Also, the protection cover 600 is coupled to the cell 400 so as to cover the protection circuit assembly 500. In addition, the protection circuit assembly 500 is coupled to the cell 400 as the ports 510 thereof are coupled to the ports 410 of the cell 400. The protection cover 600 and the cell 400 are coupled to each other as discussed above.

Hereinafter, an operation of the battery for a mobile communication terminal according to the present invention will be explained. The battery according to the present invention is detachably mounted at a body of the mobile communication terminal. Electric energy generated from the cell 400 of the battery is stably supplied to the terminal body through the protection circuit assembly 500. When the battery has been discharged, the battery is detached from the terminal body and then is charged. The charged battery is then mounted on the terminal body thus to be re-used.

In the first and second embodiments of the present invention, the cell 400 and the protection cover 600 are coupled to each other via the hooks 420 and 640 engaging the stopping holes 450 and 610, thereby facilitating an assembly operation. Thus, the coupled state between the cell 400 and the protection cover 600 is firmly maintained.

In the third and fourth embodiments of the present invention, the cell 400 and the protection cover 600 are coupled to each other via the coupling screws 710, thereby facilitating an assembly operation. Thus, the coupled state between the cell 400 and the protection cover 600 is firmly maintained.

As aforementioned, in the battery for a mobile communication terminal according to the present invention, an assembly of the cell and the protection cover constituting the battery is facilitated, which enhance an assembly productivity. Furthermore, because the coupled state of the battery is firmly maintained, the battery is prevented from being damaged when the battery is dropped or an external impact is applied to the battery. Accordingly, the reliability of the battery for the mobile communication terminal is improved.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A battery for a mobile communication terminal, comprising:
a battery cell;
a protection circuit assembly connected to the battery cell and configured to stabilize a current when the battery cell is charged or discharged;
a protection cover configured to cover the protection circuit assembly; and
a coupling unit configured to couple the protection cover to the battery cell.

2. The battery of claim 1, wherein the protection circuit assembly and the protection cover are integrally formed.

3. The battery of claim 2, further comprising:
a connection port unit provided between the protection circuit assembly and the cell and configured to connect at least one port of the protection circuit assembly to a corresponding at least one port of the cell.

4. The battery of claim 3, wherein the connection port unit is attached to the at least one port of the protection circuit assembly or the at least one port of the cell, and is formed as a conductive elastic member having an elastic force.

5. The battery of claim 3, wherein the connection port unit comprises:
a conducive compression member attached to the at least one port of the cell; and
a conductive fit member attached to the at least one port of the protection circuit assembly thus to be fitted into the conductive compression member.

6. The battery of claim 1, wherein the protection circuit assembly and the protection cover are separate components that are joined together.

7. The battery of claim 1, wherein the coupling unit comprises:
a plurality of fixing holes formed in the protection cover; and
a plurality of hooks protruding from one side of the cell and configured to engage the fixing holes to couple the protection cover to the battery cell.

8. The battery of claim 7, further comprising:
a bracket formed on one side of the battery cell,
wherein the hooks are formed on the bracket with a certain gap therebetween.

9. The battery of claim 1, wherein the coupling unit comprises:
a plurality of fixing holes formed at one side of the cell; and
a plurality of hooks protruding from one side of the protection cover and configured to engage the fixing holes to couple the protection cover to the battery cell.

10. The battery of claim 1, wherein the coupling unit comprises:
through holes formed at one side of the protection cover;
screw holes formed at one side of the battery cell; and
coupling screws respectively inserted into the through holes and engaging the screw holes to couple the protection cover to the battery cell.

11. The battery of claim 10, further comprising:
a bracket formed on one side of the battery cell,
wherein the screw holes are formed on the bracket with a certain gap therebetween.

12. The battery of claim 1, wherein the coupling unit comprises:
through holes formed at one side of the battery cell;
screw holes formed at one side of the protection cover; and
coupling screws respectively inserted into the through holes and engaging the screw holes to couple the protection cover to the battery cell.

13. A method of manufacturing a battery for a mobile communication terminal, comprising:
forming a battery cell having a power source for providing power to the mobile terminal;
forming a protection circuit assembly for stabilizing the power source of the battery cell when the battery cell is charged or discharged;
forming a protection cover for covering the protection circuit assembly; and
forming a coupling unit for coupling the protection cover to the battery cell.

14. The method of claim 13, wherein the protection circuit assembly and the protection cover are integrally formed.

15. The method of claim 14, further comprising:
providing a connection port unit between the protection circuit assembly and the cell, said connection port for connecting at least one port of the protection circuit assembly to a corresponding at least one port of the cell.

16. The method of claim 15, wherein the connection port unit is attached to the at least one port of the protection circuit assembly or the at least one port of the cell, and is formed as a conductive elastic member having an elastic force.

17. The method of claim 15, wherein the connection port unit comprises:
a conducive compression member attached to the at least one port of the cell; and
a conductive fit member attached to the at least one port of the protection circuit assembly thus to be fitted into the conductive compression member.

18. The method of claim 13, wherein the protection circuit assembly and the protection cover are separately formed components that are then joined together.

19. The method of claim 13, wherein forming the coupling unit comprises:
forming a plurality of fixing holes in the protection cover; and
forming a plurality of hooks protruding from one side of the cell and for engaging the fixing holes to couple the protection cover to the battery cell.

20. The method of claim 19, further comprising:
forming a bracket on one side of the battery cell,
wherein the hooks are formed on the bracket with a certain gap therebetween.

21. The method of claim 13, wherein forming the coupling unit comprises:
forming a plurality of fixing holes at one side of the cell; and
forming a plurality of hooks protruding from one side of the protection cover and for engaging the fixing holes to couple the protection cover to the battery cell.

22. The method of claim 13, wherein forming the coupling unit comprises:
forming through holes at one side of the protection cover;
forming screw holes at one side of the battery cell; and
screwing coupling screws into the through holes and engaging the screw holes to couple the protection cover to the battery cell.

23. The method of claim 22, further comprising:
forming a bracket on one side of the battery cell,
wherein the screw holes are formed on the bracket with a certain gap therebetween.

24. The method of claim 13, wherein forming the coupling unit comprises:
forming through holes at one side of the battery cell;
forming screw holes at one side of the protection cover; and
screwing coupling screws into the through holes and engaging the screw holes to couple the protection cover to the battery cell.
